# EUROPEAN PATENT APPLICATION

(11) **EP 3 569 625 A1**
(43) Date of publication of application: **20.11.2019**
(21) Application number: 18173175.3
(22) Date of filing: 18.05.2018
(51) Int. Cl.: C08G 18/62, C08G 18/76, C08G 18/12, C08G 18/28, C08G 18/42

(54) **POLYURETHANE HOTMELT ADHESIVE WHICH DO NOT CAUSE POLARIZER DISCOLORATION AT HTHH CONDITON**

(71) Applicant: Henkel AG & Co. KGaA, 40589 Düsseldorf (DE)
(72) Inventor: Park, Hyunjun, 08506 Seoul (KR); Seo, Yong-Seong, 08506 Seoul (KR); Kojo, Hiroki, Yokohama, Kanagawa, 235-0017 (JP)

(57) **Abstract**

The present invention relates to a moisture curable hotmelt adhesive comprising a) at least one polyurethane prepolymer obtained from the reaction of 1) at least one isocyanate compound; 2) at least one solid polyol compound; 3) at least one liquid polyol compound; and 4) at least one acrylic resin; in a presence of a catalyst, and b) at least one silane compound, wherein the ratio of solid polyol and liquid polyol is equal or more than 1.4 and equal or less than 1.8. The moisture curable hotmelt adhesive according to the present invention does not cause polarizer discoloration at high temperature and high relative humidity (HTHH) condition.

## Description

### Technical field of the invention

The present invention relates to a polyurethane hotmelt adhesive comprising at least one polyurethane prepolymer and at least one silane compound, which do not cause polarizer discoloration at high temperature and high relative humidity (HTHH) condition.

### Background of the invention

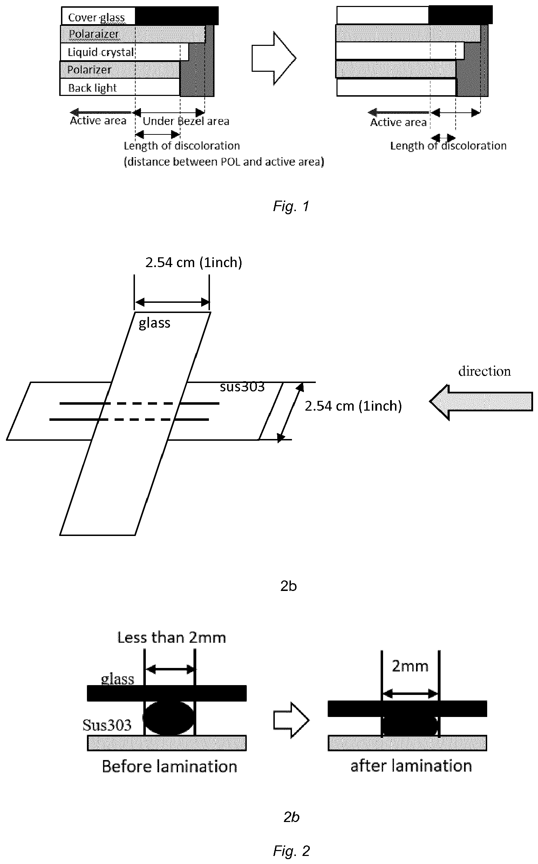

Classical polyurethane hotmelt adhesive cause polarizer discolouration at high temperature and high relative humidity (HTHH) condition. This usually happens at 60°C and 90RH%, which are typical reliability test conditions for mobile- and smartphones. This discolouration is becoming a problem because the bezel size of the current smartphones is reduced, and therefore, distance between polarizer end and active area gets shorter (this is illustrated in Figure 1).

Currently, there are lot of efforts ongoing to provide the thinner, lighter and narrower bezel display for smartphones and tablets. One solution is to replace the metal jig, which holds the mechanical jig, with an adhesive. The mechanical jig has a minimum thickness in order not to be distorted, as once this is distorted, for example at the handling, the mechanical jig cannot be used. The cost of using metal jig is higher than to replace it with an adhesive. Benefit of using an adhesive instead of a metal jig is that the thickness can be controlled. This enables reduction of the bezel width. Polyurethane (PUR) hot melts have been used widely on this purpose.

When the above-mentioned discolouration occurs, the end user will see this discolouration as a reddish background at the edge of phone or smartphone display. This is not desired end user experience.

Therefore, there is a need to provide polyurethane hotmelt adhesive, which do not cause polarizer discolouration at HTHH conditions.

### Brief description of the figures

- Figure 1: illustrates bezel size reduction and discolouration
- Figure 2: illustrates how the PUR hotmelt adhesive is dispensed on the substrate for adhesion test.
- Figure 3: illustrates the discolouration length and general structure of polarizer.
- Figure 4: illustrates the test method of discoloration length.

### Summary of the invention

The present invention relates to a moisture curable hotmelt adhesive comprising a) at least one polyurethane prepolymer obtained from the reaction of 1) at least one isocyanate compound; 2) at least one solid polyol compound; 3) at least one liquid polyol compound; and 4) at least one acrylic resin; in a presence of a catalyst, and b) at least one silane compound, wherein the ratio of solid polyol and liquid polyol is equal or more than 1.4 and equal or less than 1.8.

The present invention also relates to a process to produce moisture curable hotmelt adhesive according to the present invention, comprising steps of 1) adding liquid and solid polyol compounds and mixing; 2) adding acrylate resin and mixing; 3) placing mixture under a vacuum to remove any moisture; 4) adding isocyanate compound and mixing; 5) optionally adding any optional additive and mixing; 6) adding a catalyst and mixing wherein step 3 is done at temperature 140°C and steps 4-6 are done at temperature 130 °C.

The present invention encompasses use of a moisture curable hotmelt adhesive according to the present invention to attach a touch panel sensor and/or a cover lens to a display module, a tablet, a tv or a smartphone.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The polyurethane hotmelt adhesive according to the present invention does not cause polarizer discolouration at HTHH conditions.

By the term high temperature and high relative humidity (HTHH) condition is meant conditions such as 60°C/90RH%, 50°C/85RH% and 85°C/85RH% or generally within ranges 60-85°C / 85-90RH%.

The present invention relates to a moisture curable hotmelt adhesive comprising a) at least one polyurethane prepolymer obtained from the reaction of 1) at least one isocyanate compound; 2) at least one solid polyol compound; 3) at least one liquid polyol compound; and 4) at least one acrylic resin; in a presence of a catalyst, and b) at least one silane compound, wherein the ratio of solid polyol and liquid polyol is equal or more than 1.4 and equal or less than 1.8.

The polyurethane prepolymer used in the moisture curable hot melt adhesive composition according to the present invention is obtained from the reaction of 1) at least one isocyanate compound; 2) at least one solid polyol compound; 3) at least one liquid polyol compound; and 4) at least one acrylic resin; in a presence of a catalyst, wherein the ratio of solid polyol and liquid polyol is equal or more than 1.4 and equal or less than 1.8.

Suitable isocyanate compound for use in the present invention is aliphatic or aromatic isocyanate compound having 2 or 3 isocyanate groups, preferably 2 isocyanate groups.

If the isocyanate group contains less than 2 isocyanate groups, it leads to less reliable composition in HTHH condition such as 60°C/90RH% or 85°C/85 RH%. Whereas if the isocyanate compound contains more than 3 isocyanate groups, it leads to high modulus (easily breaks the panel (LCD, OLED, display panel etc.) and itself at low temperature), and decreased adhesion strength.

Suitable isocyanate compound to be used to form a polyurethane prepolymer according to the present invention is selected from the group consisting of 4,4-diphenylmethane diisocyanate, toluene-2,6-diisocyanate, 3-phenyl-2-ethylenediisocyante, 1,5-naphthalene diisocyanate, 1,8-naphthalene diisocyanate, cumene-2,4-diisocyanate, 4-methoxy-1,3-phenylene diisocyanate,4-ethoxy-1,3-phenylenediisocyanate, 2,4-diisocyanatodiphenyl ether, 5,6-dimethyl-1,3-phenylenediisocyanate, 4-methyl-1,3-cyclohexylene diisocyanate, isophoronediisocyanate, hydrogenated methylenebisphenyldiisocyanate, 1,2-dodecane diisocyanate and mixtures thereof, preferably said isocyanate compound has 2 isocyanate groups, and more preferably said isocyanate compound is 4,4-diphenylmethane diisocyanate.

Examples of commercially available isocyanate compounds for use in the present invention are but not limited to Lupranate MS (4,4-diphenylmethane diisocyanate) from BASF and Desmodur 0118T Fused and Desmodur 44C Fused from Covestro.

Isocyanate compound can be present from 5 to 25% by weight of the total weight of the composition, preferably from 10 to 20% and more preferably from 12 to 17%.

Generally, lower the quantity of an isocyanate compound, the faster the cure speed of the hotmelt adhesive is. However, if the quantity of an isocyanate compound is too low, the hotmelt adhesive cures too fast, even during the process to produce the hotmelt. On the other hand, if the quantity of an isocyanate compound is too high, the cure speed slows down, and have a negative effect on a process using the hotmelt adhesive.

Suitable solid polyol for use in the present invention can be crystalline or powder type of polyol. Suitable solid polyols have preferably softening point from 60 to 120°C.

If the softening point is below 60°C, the green strength (the strength one gets when the hot melt solidifies without cure) is too low to fasten the substrate. Whereas if the softening point is higher than 120°C, the process temperature increases too much.

Suitable solid polyol compound to be used to form a polyurethane prepolymer according to the present invention is a linear polyester polyol having a general structure (I) 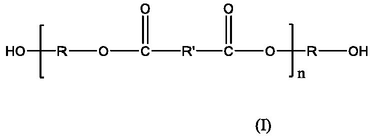 wherein R is selected from the group consisting of C1-C12 alkyl; R' is selected from the group consisting of C1-C12 alkyl; n is integer from 1 to 30.

In one preferred embodiment R is hexane and R' is butane and n is 15.

Preferably, solid polyol has a molecular weight (Mw) from 2000 to 8500, wherein the molecular weight is measured by GPC.

If the molecular weight (Mw) of a solid polyol is less than 2,000, the adhesion of the hotmelt becomes too low and at the same time modulus becomes too low. On the other hand, if Mw of a solid polyol is more than 8,500, its viscosity becomes too high and the holtmelt will not to melt in the process.

Examples of commercially available solid polyol compounds for use in the present invention are but not limited to Dynacoll 7362, Dynacoll 7360 and Dynacoll 7361 from Evonik and Eternacoll 3010 from Ube.

The solid polyol compound can be present from 15 to 35% by weight of the total weight of the composition, preferably from 20 to 30% and more preferably from 22 to 26%.

If the quantity of a solid polyol is less than 15%, the green strength is too low to fasten the substrate. Whereas if the quantity of solid polyol exceeds 35%, the viscosity of the hotmelt increases, and the application process does not work ideally.

Suitable liquid polyol used to form a polyurethane prepolymer according to the present invention is a polyester polyol and has a general structure (II) or (III) 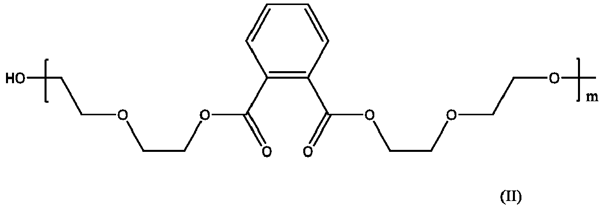 wherein m is an integer 4 - 10; 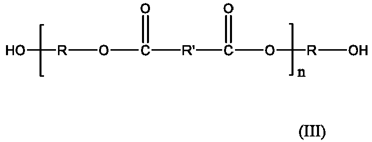 wherein R is selected from the group consisting of neopentyl, butadiene, C6-C12 aromatic; R' is selected from the group consisting of C1-C12 alkyl, aromatic group derived from phthalic anhydride or polyethylene terephthalate (PET); n is integer from 1 to 30; or
a polyether polyol formed from propylene oxide and propylene glycol having a general structure (IV) 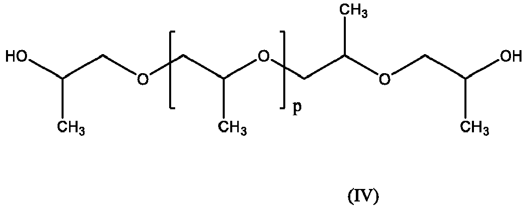 wherein p is an integer 17-90; and
mixtures thereof.

Preferably, liquid polyol has a molecular weight (Mw) from 1500 to 1700, wherein the molecular weight is measured by GPC. This molecular weight range is ideal because it provides ideal viscosity and the hotmelt process can be controlled.

Examples of commercially available liquid polyol compounds for use in the present invention are but not limited to PP3000 from BASF and Stepanpol PDP 70 from Stepanpol.

The liquid polyol compound can be present from 25 to 45% by weight of the total weight of the composition, preferably from 30 to 40%, and more preferably from 31 to 35%.

A range from 25 to 45% is used, because at this range the discolouration does not take a place. In addition, if the quantity of a liquid polyol is more than 45% the viscosity is too low, and the green strength would be too low to fasten a substrate. On the other hand, if the quantity of a liquid polyol is less than 25% viscosity would increase too much, and therefore, the hotmelt process would be difficult to control.

The Applicant has found out that to avoid the polarised discolouration at HTHH conditions, the ratio of solid polyol and liquid polyol is equal or more than 1.4 and equal or less than 1.8.

If the ratio is less than 1.4, the discoloration length of polarizer is not reduced, and on the other hand, if the ratio is more than 1.8, the viscosity of the hotmelt would be too high in order to control in the hot melt process.

Suitable acrylic resin used to form a polyurethane prepolymer according to the present invention is an acrylic copolymer. Acrylic copolymer influences green strength of the hotmelt adhesive.

In preferred embodiment, acrylic resin has hydroxy groups and/or methoxy groups. Hydroxy and methoxy groups contributes to the cross linking, and therefore, increase the adhesion strength.

In an embodiment where the acrylic resin contains hydroxy group, the hydroxy groups of the polyol (solid or liquid) and acrylic resin reacts with isocyanate, and subsequently form a urethane linkage.

Preferably, the acrylic resin is selected from the group consisting of methyl methacrylate and n-butyl methacrylate copolymer; methyl methacrylate, n-butyl methacrylate, n-butyl acrylate (n-BA), hydroxy ethyl methacrylate and methacrylic acid copolymer and mixtures thereof.

Examples of commercially available acrylic resins for use in the present invention are but not limited to Elvacite 2016, Elvacite 2014 and Elvacite 2008 from Lucite.

The acrylic resin is present from 10 to 30% by weight of the total weight of the composition, preferably from 15 to 25% and more preferably from 17 to 22%.

The selected acrylic resin quantity in the composition prolongates the open time of the hotmelt adhesive. PUR hotmelt cures with the moisture in the air, and solidifies at the room temperature. Therefore, the substrate to be fastened needs to be attached before the hotmelt solidifies or cures, and hence, prolongated open time is desired.

A polyurethane prepolymer used in the moisture curable hot melt adhesive composition according to the present invention is obtained from the reaction in a presence of a catalyst.

Suitable catalyst used to form a polyurethane prepolymer according to the present invention is selected from the group consisting of 2,2-dimorpholinodiethylether (DMDEE), dimethylcyclohexylamine (DMCHA), benzyldimethyleneamine (BDMA), 1,8-diazabicyclo-(5,40)-undecane, dimethyl piperazine and mixtures thereof.

Examples of commercially available catalyst for use in the present invention is but not limited to 2,2-dimorpholinodiethylether (DMDEE) from Huntsman.

The catalyst can be present from 0.01 to 5% by weight of the total weight of the composition, preferably from 0.05 to 2% and more preferably from 0.1 to 1%.

If the quantity of a catalyst is less than 0.01%, the cure rate becomes slow. Whereas if the quantity of a catalyst is more than 5%, the hotmelt cures in a bottle and/or in a syringe when the hotmelt is heated to be dispensed to a substrate.

A moisture curable hotmelt adhesive according to the present invention comprises a silane compound. Said silane compound acts as an adhesion promoter in the hotmelt adhesive.

Suitable silane compound for use in the present invention is an amine silane compound or a thiol silane compound. Amine and thiol silanes provide ideal adhesion strength to the hotmelt adhesive.

Preferably, the silane compound is selected from the group consisting of aminopropyltriethoxysilane, ureidopropyltrimethoxysilane, mercaptopropyltriethoxysilane, 2-aminoethyl-3-amino-propylmethyldimethoxy silane, bis(3-trimethoxysilylpropyl)amine, 3-mercaptopropyltrimethoxysilane, aminotrimethoxysilane, bis-(gamma-triethoxysilylpropyl)amine, gamma-isocynatopropyltriethoxysilane, gamma-isocynatopropyltrimethoxysilane and mixtures thereof.

Examples of commercially available silane compounds for use in the present invention are but not limited to Silquest A1100, Silquest A1524 and Silquest A1891 from Momentive, Dynasilane 1411, Dynasilane 1124 and MTMO from Evonik.

The silane compound can be present from 0.1 to 5% by weight of total weight of the composition, preferably from 0.2 to 2% and more preferably from 0.3 to 1%.

If the quantity of a silane compound is less than 0.1, the adhesion strength is not ideal. On the other hand, quantity more than 5% would not improve the adhesion strength, but just saturate the adhesive composition.

A moisture curable hotmelt adhesive according to the present invention may further comprise additional components such as a colouring paste and a levelling agent.

Example of commercially available colouring paste for use in the present invention is but not limited to Moltopren black paste F from ISL Chemie.

Example of commercially available levelling agent for use in the present invention is but not limited to FL3740 (liquid polyacrylate) from BASF.

An additional component may be present from 0.01 to 10% by weight of the total weight of the composition. A colouring paste can be present for example from 3 to 10% by weight of the total weight of the composition.

A process to produce moisture curable hotmelt adhesive according to the present invention comprises steps of
1) adding liquid and solid polyol compounds and mixing;
2) adding acrylate resin and mixing;
3) placing mixture under a vacuum to remove any moisture;
4) adding isocyanate compound and mixing;
5) optionally adding any optional additive and mixing;
6) adding a catalyst and mixing
wherein step 3 is done at temperature 140°C and steps 4-6 are done at temperature 130 °C.

The present invention also encompasses cured hotmelt adhesive according to the present invention.

The present invention also encompasses use of a moisture curable hotmelt adhesive according to the present invention to attach a touch panel sensor and/or a cover lens to a display module, a tablet, a TV or a smartphone.

### Examples

### Test methods:

### Adhesion (N/mm²)

The PUR hot melt adhesive is dispensed on the sus303 panel at the temperature of 110°C as illustrated in Figure 2. Subsequently, the glass panel is mounted. Dispensing is optimised in order to have 2 mm width of PUR hotmelt adhesive after the lamination. With this width the adhesion test should be done after one week for full cure.

The adhesion is measured vertically by UTM (Universal Testing Machine) then to calculate the area, measure the final width by microscope. Adhesion strength equals measured force by unit, Newton over area (area is 2.54cm (1inch) times width = 2mm as from figure 2b.) Dash line in the figure 2a illustrates the dispensed PUR hot melt adhesive under the glass.

### Discolouration length definition:

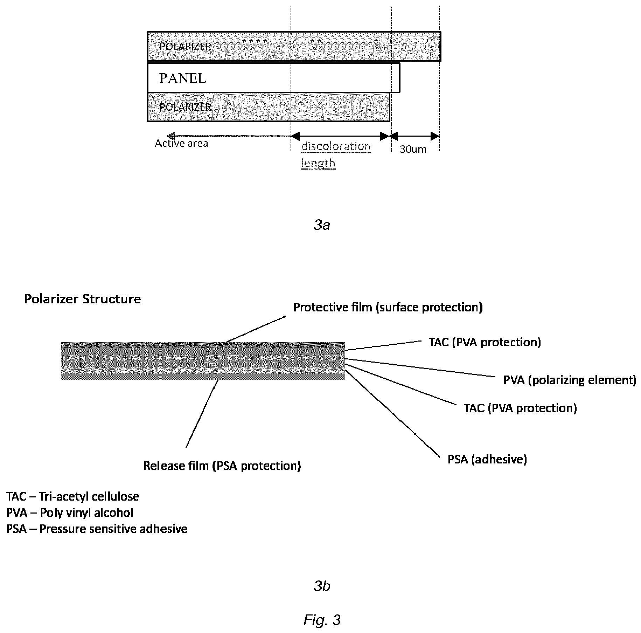

Figure 3a illustrates the discolouration length.

In the current architecture, discoloration length needs to be within 200µm. Although, if the ratio is increased, discoloration length would not be zero, this is because iodine sublimation under the HTHH condition. Polarizer is formed from several layers (this is illustrated generally in figure 3b), and polarizing element is iodine in the PVA layer. General discolouration is blocked in the present invention by using PUR adhesive according to the present invention, however, this does not prevent iodine sublimation (causes some discolouration), and therefore, discolouration length will not be zero.

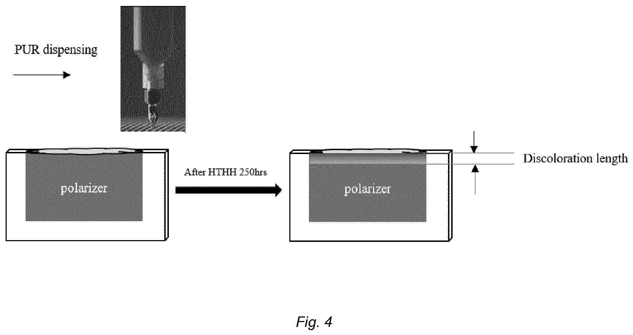

Figure 4 illustrates the test method of discoloration length.

In the test the polarizer is attached on the glass (glass should be gorilla glass from corning or any other same grade), subsequently the PUR hotmelt is applied between the glass and the polarizer. More than 3 days are waited until PUR hotmelt is fully cured. After the full cure, the sample is placed into the HTHH oven for 250 hours, after the discoloration length is measured. Under the HTHH condition, humidity passes through the PUR hotmelt, and it goes downward, and subsequently turns polarizer reddish, and the length from the top of the polarizer to the bottom of the discoloration part is measured.

One example composition according to the present invention and three comparative example compositions were prepared. Specific details of the components and quantities are listed in table 1.

**Table 1**

| | Comparative example 1 | Comparative example 2 | Comparative example 3 | Example 1 |
|---|---|---|---|---|
| Polyether/ polyester polyol | 33.5 | 32.8 | 32.6 | 32.1 |
| Acryl Resin | 20.2 | 18.7 | 19.5 | 20.0 |
| Crystalline polyester | 22.3 | 25.0 | 25.0 | 25.0 |
| Amino type silane | 0.5 | 0.5 | 0.5 | 0.5 |
| Catalyst | 0.1 | 0.1 | 0.1 | 0.1 |
| MDI | 15.0 | 14.5 | 13.9 | 13.9 |
| Additive | 8.4 | 8.4 | 8.4 | 8.4 |
| Ratio of solid polyol and liquid polyol | 1.27 | 1.33 | 1.36 | 1.40 |
| Adhesion (N/mm²) | 7.0 | 6.4 | 6.8 | 6.8 |
| Performance (discoloration length) | 290µm | 240 µm | 180 µm | 50 um |

| | | | | |
|---|---|---|---|---|
| Polyether Polyol: PP3000 (OH number=35 viscosity at 25°C=600mPas) from BASF Polyester Polyol: Stepanpol (OH number=70, viscosity at 25°C=1,900mPas) from Stepanpol Acryl Resin: Elvacite 2013 (Tg=80°C, Mw=34,000, powder type) from Lucite Crystalline polyester: Dynacoll 7360 (solid type) from Evonik Catalyst: 2,2-dimorpholinodiethylether (DMDEE) from Huntsman Amino type silane: Dynasylan 1189 (N-[3-(trimethoxysilyl)propyl]butylamine) from Evonik Additive: moltopren black paste F from ISL chemie MDI: lupranate MS (4,4-Diphenylmethane diisocyanate) from BASF | | | | |

## Claims

1. A moisture curable hotmelt adhesive comprising
a) at least one polyurethane prepolymer obtained from the reaction of
1) at least one isocyanate compound;
2) at least one solid polyol compound;
3) at least one liquid polyol compound; and
4) at least one acrylic resin;
in a presence of a catalyst,
and
b) at least one silane compound,
wherein the ratio of solid polyol and liquid polyol is equal or more than 1.4 and equal or less than 1.8.

2. A moisture curable hotmelt adhesive according to claim 1, wherein said isocyanate compound has 2 or 3 isocyanate groups and is selected from the group consisting of 4,4-diphenylmethane diisocyanate, toluene-2,6-diisocyanate, 3-phenyl-2-ethylenediisocyante, 1,5-naphthalene diisocyanate, 1,8-naphthalene diisocyanate, cumene-2,4-diisocyanate, 4-methoxy-1,3-phenylene diisocyanate,4-ethoxy-1,3-phenylenediisocyanate, 2,4-diisocyanatodiphenyl ether, 5,6-dimethyl-1,3-phenylenediisocyanate, 4-methyl-1,3-cyclohexylene diisocyanate, isophoronediisocyanate, hydrogenated methylenebisphenyldiisocyanate, 1,2-dodecane diisocyanate and mixtures thereof, preferably said isocyanate compound has 2 isocyanate groups, and more preferably said isocyanate compound is 4,4-diphenylmethane diisocyanate.

3. A moisture curable hotmelt adhesive according to claim 1 or 2, wherein said isocyanate compound is present from 5 to 25% by weight of the total weight of the composition, preferably from 10 to 20% and more preferably from 12 to 17%.

4. A moisture curable hotmelt adhesive according to any of claims 1 to 3, wherein said solid polyol compound is a linear polyester polyol having a general structure (I) 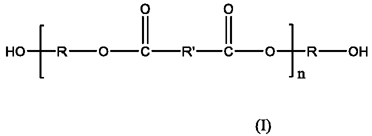 wherein R is selected from the group consisting of C1-C12 alkyl; R' is selected from the group consisting of C1-C12 alkyl; n is integer from 1 to 30.

5. A moisture curable hotmelt adhesive according to any of claims 1 to 4, wherein said solid polyol compound is present from 15 to 35% by weight of the total weight of the composition, preferably from 20 to 30% and more preferably from 22 to 26%.

6. A moisture curable hotmelt adhesive according to any of claims 1 to 5, wherein said liquid polyol is a polyester polyol having a general structure (II) or (III) 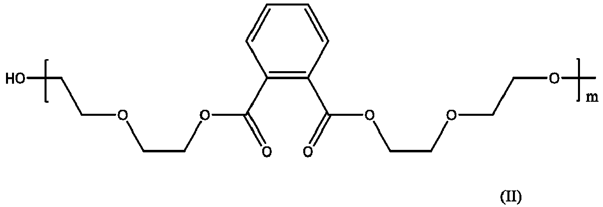 wherein m is an integer 4 - 10; 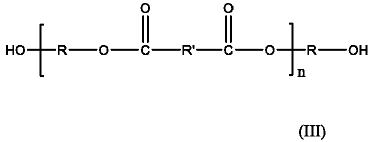 wherein R is selected from the group consisting of neopentyl, butadiene, C6-C12 aromatic; R' is selected from the group consisting of C1-C12 alkyl, aromatic group derived from phthalic anhydride or polyethylene terephthalate (PET); n is integer from 1 to 30; or
a polyether polyol formed from propylene oxide and propylene glycol having a general structure (IV) 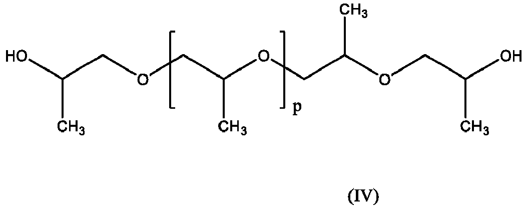 wherein p is an integer 17-90; and
mixtures thereof.

7. A moisture curable hotmelt adhesive according to any of claims 1 to 6, wherein said liquid polyol compound is present from 25 to 45% by weight of the total weight of the composition, preferably from 30 to 40% and more preferably from 31 to 35%.

8. A moisture curable hotmelt adhesive according to any of claims 1 to 7, wherein said acrylic resin is an acrylic copolymer, preferably acrylic resin is selected from the group consisting of methyl methacrylate and n-butyl methacrylate copolymer; methyl methacrylate, n-butyl methacrylate, n-butyl acrylate (n-BA), hydroxy ethyl metacrylate and methacrylic acid copolymer and mixtures thereof.

9. A moisture curable hotmelt adhesive according to any of claims 1 to 8, wherein said acrylic resin is present from 10 to 30% by weight of the total weight of the composition, preferably from 15 to 25% and more preferably from 17 to 22%.

10. A moisture curable hotmelt adhesive according to any of claims 1 to 9, wherein said catalyst is selected from the group consisting of 2,2-dimorpholinodiethylether (DMDEE), dimethylcyclohexylamine (DMCHA), benzyldimethyleneamine (BDMA), 1,8-diazabicyclo-(5,40)-undecane, dimethyl piperazine and mixtures thereof.

11. A moisture curable hotmelt adhesive according to any of claims 1 to 10, wherein said catalyst is present from 0.01 to 5% by weight of the total weight of the composition, preferably from 0.05 to 2% and more preferably from 0.1 to 1%.

12. A moisture curable hotmelt adhesive according to any of claims 1 to 11, wherein said silane compound is amine silane compound or thiol silane compound, preferably selected from the group consisting of aminopropyltriethoxysilane, ureidopropyltrimethoxysilane, mercaptopropyltriethoxysilane, 2-aminoethyl-3-amino-propylmethyldimethoxy silane, bis(3-trimethoxysilylpropyl)amine, 3-mercaptopropyltrimethoxysilane, aminotrimethoxysilane, bis-(gamma-triethoxysilylpropyl)amine, gamma-isocynatopropyltriethoxysilane, gamma-isocynatopropyltrimethoxysilane and mixtures thereof.

13. A moisture curable hotmelt adhesive according to any of claims 1 to 12, wherein said silane compound is present from 0.1 to 5% by weight of total weight of the composition, preferably from 0.2 to 2% and more preferably from 0.3 to 1 %.

14. A process to produce moisture curable hotmelt adhesive according to any of claims 1 to 13, comprising steps of
1) adding liquid and solid polyol compounds and mixing;
2) adding acrylate resin and mixing;
3) placing mixture under a vacuum to remove any moisture;
4) adding isocyanate compound and mixing;
5) optionally adding any optional additive and mixing;
6) adding a catalyst and mixing
wherein step 3 is done at temperature 140°C and steps 4-6 are done at temperature 130 °C.

15. Use of a moisture curable hotmelt adhesive according to any of claims 1 to 13 to attach a touch panel sensor and/or a cover lens to a display module, a tablet, a tv or a smartphone.
